# EUROPEAN PATENT SPECIFICATION

(11) **EP 0 573 043 B1**
(45) Date of publication and mention of the grant of the patent: **11.10.1995**
(21) Application number: 93108952.8
(22) Date of filing: 03.06.1993
(51) Int. Cl.: F16L 11/08

(54) **Reinforced rubber hose**
Verstärkter Kunststoffschlauch
Tuyau renforcé en matière plastique

(30) Priority: 05.06.1992 JP 146026/92
(43) Date of publication of application: 08.12.1993
(73) Proprietor: SUMITOMO RUBBER INDUSTRIES LIMITED, Chuo-ku Kobe-shi Hyogo 651 (JP)
(72) Inventor: Sakuraoka, Makoto, Kobe-shi, Hyogo 655 (JP); Kozono, Yasufumi, Nishinomiya-shi, Hyogo 662 (JP)
(74) Representative: Bohnenberger, Johannes, Dr.

(56) References cited:
- EP-A- 0 032 352
- DE-A- 2 742 918
- FR-A- 2 313 622
- GB-A- 1 556 948

## Description

### BACKGROUND OF THE INVENTION

The present invention relates to a reinforced rubber hose used for dredging or transportation of a fluid such as oil or the like.

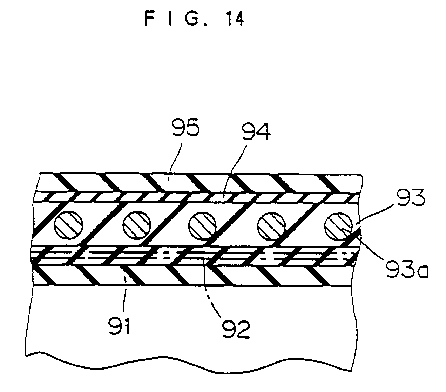

A conventional reinforced rubber hose of the type above-mentioned has a section structure shown in Fig. 14. In Fig. 14, the reinforced rubber hose comprises an inner rubber layer 91, a reinforcing layer 92, an intermediate rubber layer 93 containing a rigid member 93a such as a helical wire, rings or the like, a breaker layer 94 and an outer rubber layer 95, these layers being successively laminated on one another in this order from the inner peripheral side of the hose.

As the inner rubber layer 91, there is used a layer excellent in corrosion resistance against a fluid to be transported. The reinforcing layer 92 contains fiber cords inclined at a predetermined angle with respect to the axis of the hose (hereinafter referred to as the cord angle) and mainly serves as a pressure resistant layer. The rigid member 93a such as an embeded helical wire or the like prevents the reinforced rubber hose from being crushed or buckled due to a bend, and particularly restrains the reinforcing layer 92 from being radially expanded (circumferentially stretched). The breaker layer 94 prevents the rigid member 93a such as a helical wire or the like from being externally exposed, and also prevents the reinforced rubber hose from being cut or damaged due to external injury. As the outer rubber layer 95, there is used a layer excellent in weather resistance.

Generally, when an internal pressure is exerted to a hose in which the cord angle is greater than 54°44′ (i.e., neutral angle), the hose is radially contracted and axially stretched such that the cord angle approaches the neutral angle. On the other hand, when the cord angle is smaller than the neutral angle, the hose is radially expanded and axially contracted such that the cord angle approaches the neutral angle.

In the reinforced rubber hose above-mentioned, if the reinforcing layer 92 is cracked or broken for some reason, the internal fluid leaks and flows outside through the reinforcing layer 92. If the leaking fluid is oil or chemicals, such leakage causes environmental pollution or the like. In particular, if such leakage takes place on the sea, the pollution becomes very serious.

In this connection, Japanese Patent Publication 47188/1984 or Japanese Utility Model Laid-Open Publication 41786/1990 discloses a reinforced rubber hose in which a reinforcing layer unit comprises (i) a main reinforcing layer disposed at the inner peripheral side of an intermediate rubber layer containing a rigid member or the like, and (ii) an auxiliary reinforcing layer disposed at the outer peripheral side of the intermediate rubber layer, and which is adapted such that, if the main reinforcing layer is broken, the auxiliary reinforcing layer holds the fluid to be transported, thus preventing the fluid from leaking outside.

In the reinforced rubber hose disclosed in each of the publications above-mentioned, the cord angle of the fiber cords in the auxiliary reinforcing layer is smaller than the neutral angle. Accordingly, when the main reinforcing layer is broken, the auxiliary reinforcing layer can hardly be stretched in the axial direction. Thus, when the main reinforcing layer is broken, the shock exerted to the auxiliary reinforcing layer is great. This involves the likelihood that the breakdown of the main reinforcing layer leads to the breakdown of the auxiliary reinforcing layer. In particular, when the cord angles of the fiber cords in the main and auxiliary reinforcing layers of a hose are adjacent to each other as in Japanese Utility Model Laid-Open Publication No. 41786/1990, the internal pressure is momentarily exerted to the auxiliary reinforcing layer at the time when the main reinforcing layer is broken. This further increases the possibility of the auxiliary reinforcing layer being broken simultaneously with the breakdown of the main reinforcing layer.

There is also known a reinforced rubber hose arranged such that the breakdown of the main reinforcing layer is detected by the fact that the auxiliary reinforcing layer is axially stretched when the main reinforcing layer is broken. In such a hose, the breakdown of the main reinforcing layer is actually detected by the fact that the entire length of that portion of the hose between adjacent hose fixing points, is stretched to cause that portion of the hose to be curved. Accordingly, such detection is influenced by the distance between adjacent hose fixing points, and therefore becomes unreliable. Accordingly, the state where the internal pressure is held by the auxiliary reinforcing layer, is left as it is for a long period of time. Thus, there is a possibility of the auxiliary reinforcing layer being broken soon.

### SUMMARY OF THE INVENTION

To solve the technical problems above-mentioned, the present invention is proposed with the object of providing a reinforced rubber hose which can securely prevent the internal fluid from leaking and which can securely detect the breakdown of the main reinforcing layer.

To achieve the object above-mentioned, the present invention provides a reinforced rubber hose comprising, between a tubular inner rubber layer and a tubular outer rubber layer: a tubular intermediate rubber layer Containing a helical rigid member or steel cords; a tubular main reinforcing layer containing fiber cords; and a tubular auxiliary reinforcing layer containing fiber cords; the main reinforcing layer is disposed between the tubular inner rubber layer and the intermediate rubber layer; the auxiliary reinforcing layer is disposed between the tubular outer rubber layer and the intermediate rubber layer, and is characterized in that: the auxiliary reinforcing layer comprises a tubular main layer portion and a stretch restraining layer portion laminated on the main layer portion at a circumferential part thereof, the stretch restraining layer portion being adapted to partially restrain the main layer portion from being stretched in the axial direction of the hose such that, when the main reinforcing layer is broken to cause the internal pressure to be held by the auxiliary reinforcing layer, the hose is curved at at least a longitudinal part thereof; and the fiber cords in the main layer portion are inclined at an angle of 60° to 80° with respect to the axis of the hose.

In the reinforced rubber hose having the arrangement above-mentioned, the stretch restraining layer portion is partially laminated on the main layer portion of the auxiliary reinforcing layer to cause the auxiliary reinforcing layer to present different elasticities at different parts thereof. Accordingly, when the main reinforcing layer is broken to cause the internal pressure to be held by the auxiliary reinforcing layer, at least a portion of the reinforced rubber hose is deformed in the form of a circular arc. It is therefore possible to securely detect the breakdown of the main reinforcing layer. In particular, such detection can be made with no influence exerted by the distance between adjacent hose fixing points or the like. Thus, such a breakdown can be further securely detected.

Further, since the cord angle of the fiber cords in the auxiliary reinforcing layer is set in the range from 60° to 80°, the auxiliary reinforcing layer is securely provided with a sufficient amount of axial stretch in order that the hose is deformed in the form of a circular arc when the main reinforcing layer is broken. Further, since the auxiliary reinforcing layer is provided with such a sufficient amount of stretch, the shock exerted to the auxiliary reinforcing layer at the time of the breakdown of the main reinforcing layer, can be relieved. This results in prevention of the breakdown of the auxiliary reinforcing layer.

### BRIEF DESCRIPTION OF THE DRAWINGS

Figure 1 is a schematic vertical section view of the reinforced rubber hose according to an embodiment of the present invention;
Figure 2 is a schematic view illustrating the direction of arrangement of fiber cords;
Figure 3 is a schematic section view of the reinforced rubber hose illustrating the arrangement of an auxiliary reinforcing layer contained therein;
Figure 4 is a schematic plan view of the reinforced rubber hose illustrating the arrangement of a stretch restraining layer contained therein;
Figure 5 is a schematic plan view of the reinforced rubber hose as deformed in the form of a circular arc;
Figure 6 is a schematic vertical section view of the reinforced rubber hose according to another embodiment of the present invention;

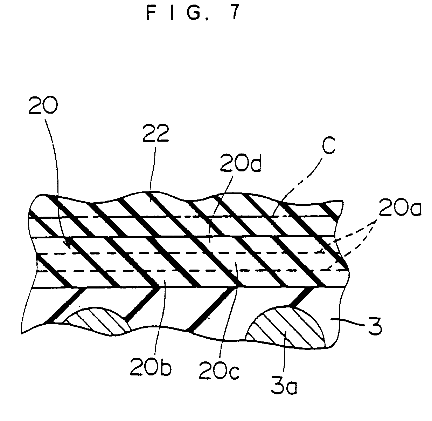

Figure 7 is a schematic section view of main portions of the reinforced rubber hose shown in Figure 6;
Figure 8 is a schematic plan view of the reinforced rubber hose according to a further embodiment of the present invention;
Figure 9 is a schematic plan view illustrating the arcuate state of the reinforced rubber hose shown in Figure 8;
Figure 10 is a schematic plan view of the reinforced rubber hose according to still another embodiment of the present invention;
Figure 11 is a schematic plan view illustrating the arcuate state of the reinforced rubber hose shown in Figure 10;
Figure 12 is a view illustrating variations of the pressure in a destructive test;
Figure 13 is a view illustrating variations of the pressure in a destructive test; and
Figure 14 is a schematic vertical section view of a conventional reinforced rubber hose.

### EMBODIMENTS

The following description will discuss in detail the present invention with reference to the attached drawings showing embodiments thereof.

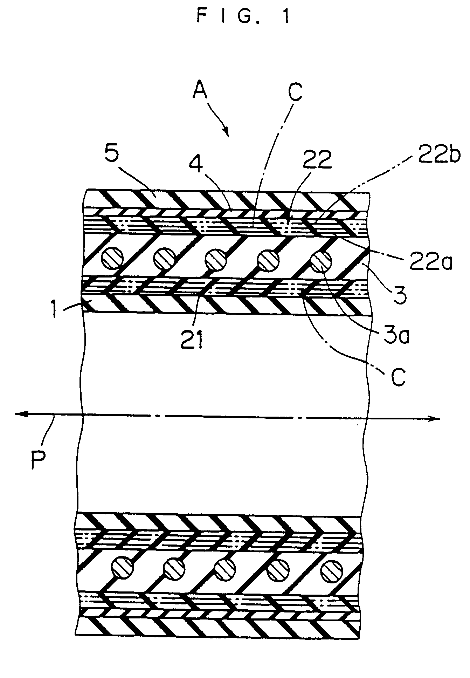

Referring to Fig. 1, a reinforced rubber hose A comprises a tubular inner rubber layer 1, a tubular main reinforcing layer 21 containing fiber cords, a tubular intermediate rubber layer 3 containing a helical wire 3a serving as a rigid member, a tubular auxiliary reinforcing layer 22 containing fiber cords, a tubular breaker layer 4 for preventing the hose A from being cut or damaged due to external injury, and a tubular outer rubber layer 5 excellent in weather resistance, these layers being successively laminated on one another in this order from the inner peripheral side of the hose A.

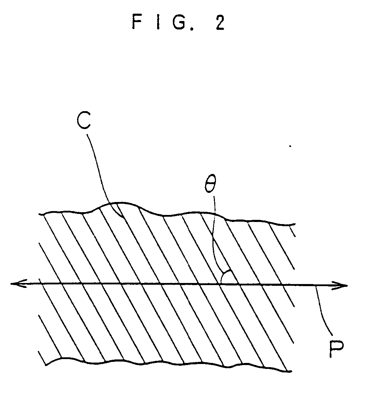

The main reinforcing layer 21 comprises two lamination plies each of which comprises a rubber layer portion containing polyester fiber cords C as the fiber cords. In the main reinforcing layer 21, the number of lamination plies is selected such that the main reinforcing layer 21 has breaking strength capable of standing a pressure which is 5 times as much as the working pressure and which is the general design standard. In Fig. 2, the cord angle ϑ of the main reinforcing layer 21 with respect to the hose axial direction P is set in the range from 35° to 50° with the resiliency, flex resistance and the like of the hose taken into consideration.

The helical wire 3a is made of, for example, a hard steel wire having a diameter of 9.45 mm which is wound with a pitch of 35 mm.

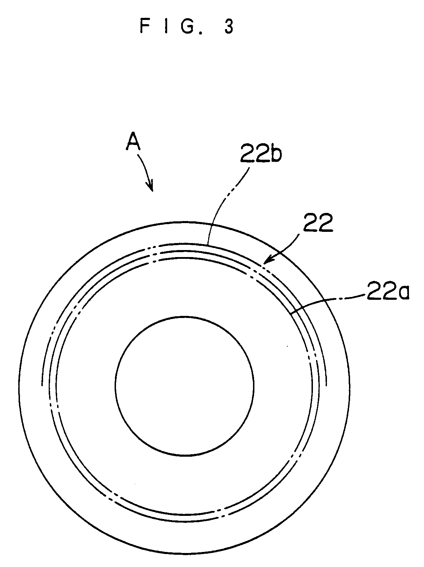

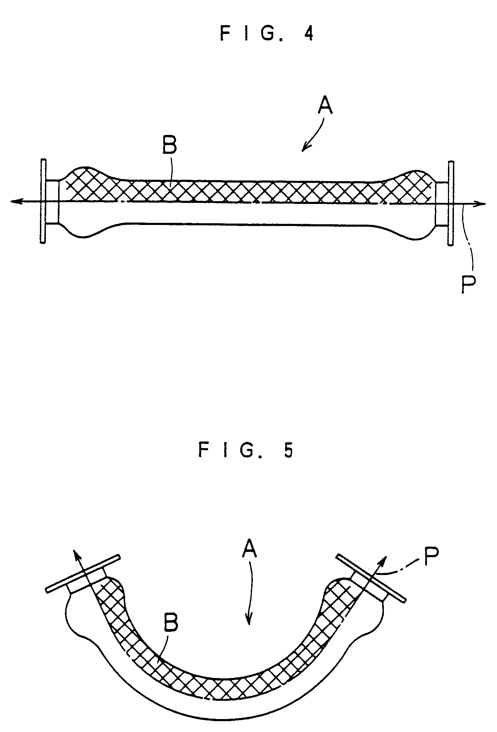

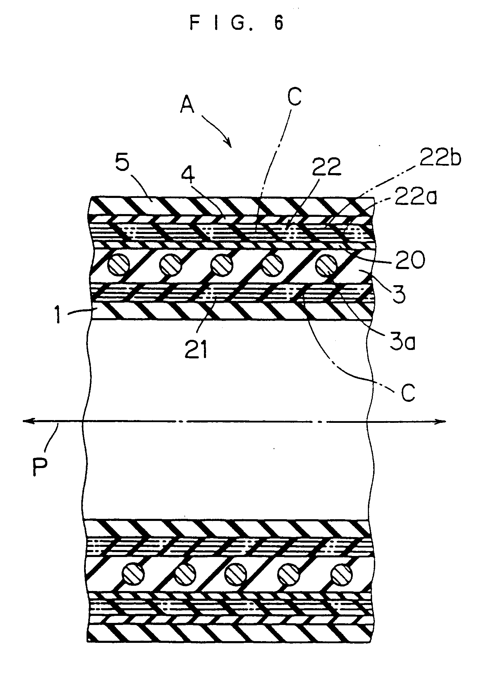

Referring to Figs. 1 and 3, the auxiliary reinforcing layer 22 comprises a rubber layer containing: a main layer portion 22a which includes at least two lamination plies formed by polyester fiber cords C made of the same material as that of the fiber cords in the main reinforcing layer 21; and a stretch restraining layer portion 22b laminated on a portion of the outer peripheral surface of the main layer portion 22a. The stretch restraining layer portion 22b restrains the main layer portion 22a from being stretched such that, when the internal pressure exceeds a predetermined level to break the main reinforcing layer 21, the reinforced rubber hose A is deformed in the form of a circular arc as shown in Fig. 5 (in which a part B containing the stretch restraining layer portion 22b is hatched). Referring to Figs. 3 to 5 (in Figs. 4 and 5, the part B containing the stretch restraining layer portion 22b is hatched), the stretch restraining layer portion 22b is laminated on that semi-circumferential part of the main layer portion 22a which is adapted to form the inner periphery of the circular arc along which the hose is curved. The stretch restraining layer portion 22b restrains the hose at its portion adapted to form the inner peripheral side of the circular arc from being axially stretched, so that the hose is deformed in the form of the circular arc above-mentioned.

In the main layer portion 22a, the number of lamination plies is selected such that the main layer portion 22a has breaking strength capable of standing a pressure twice as much as the working pressure. In the stretch restraining layer portion 22b, the number of lamination plies is a half of the number of lamination plies of the main layer portion 22a. The cord angle of the polyester fiber cords C in the main layer portion 22a is set in the range from 60° to 80°. To restrain the main layer portion 22a from being stretched, the cord angle of the polyester fiber cords C in the stretch restraining layer portion 22b is smaller than the cord angle of the polyester fiber cords C in the main layer portion 22a, and preferably set in the range from 35° to 50°.

The breaker layer 4 contains chemical fiber cords. Examples of the material of the chemical fiber cords include a nylon fiber, a Vinylon (RTM) fiber, a polyester fiber and Kevlar (RTM) (manufactured by Du Pont Co., Ltd.).

According to the embodiment above-mentioned, the hose is adapted to be curved when the main reinforcing layer 21 is broken to cause the internal pressure to be held by the auxiliary reinforcing layer 22. This securely detects the breakdown of the main reinforcing layer 21. In particular, such detection can be made with no influence exerted by the distance between adjacent hose fixing points or the like, so that the detection can be further securely made.

Further, since the cord angle of the fiber cords in the auxiliary reinforcing layer 22 is set in the range from 60° to 80°, the auxiliary reinforcing layer 22 can be securely provided with a sufficient amount of axial stretch at the time when the main reinforcing layer 21 is broken. As a result, the shock to the auxiliary reinforcing layer 22 can be relieved to prevent the auxiliary reinforcing layer 22 from being broken simultaneously with the breakdown of the main reinforcing layer 21. This securely prevents the internal fluid from leaking. Further, since the auxiliary reinforcing layer 22 is securely provided with a sufficient amount of axial stretch, the reinforced rubber hose can readily present a desired arcuate shape.

In the main reinforcing layer 21 of which radial strength is reinforced by the intermediate rubber layer 3 containing the helical wire 3a, the cord angle of the fiber cords is set in the range from 35° to 50°. This efficiently assures the strength required. More specifically, the cord angle of the fiber cords in the main reinforcing layer 21 is preferably in the range from 20° to 50° when importance is attached to a stretch in the axial direction of the hose. However, when the cord angle is smaller than 35°, the hose is liable to be buckled. Accordingly, the cord angle is actually set in the range from 35° to 50°.

Fig. 6 shows another embodiment of the present invention. This embodiment in Fig. 6 differs from the embodiment shown in Fig. 1 in that a tubular at-break separable layer 20 is disposed between the intermediate rubber layer 3 and the auxiliary reinforcing layer 22. This at-break separable layer 20 interposed between the intermediate rubber layer 3 and the auxiliary reinforcing layer 22 is adapted such that, when the main reinforcing layer 21 is broken, the component plies of the at-break separable layer 20 are separated from each other along the entire length of the hose. A general reinforced rubber hose presents an axial stretch of 1.5 to 2.5% under a normal working pressure and an axial stretch of 10 to 15% under a breaking pressure. Accordingly, the at-break separable layer 20 is so arranged as to present exfoliation when the axial stretch exceeds 10%.

More specifically, the at-break separable layer 20 comprises two lamination plies in each of which a nylon woven fabric 20a having fine meshes (420d, density = 53 yarns/inch ; 1d = 9tex) is coated at both sides thereof with rubber having a thickness of 0.2 mm made of natural rubber as a base. In a normal state, the intermediate rubber layer 3 and rubber 20b at the underside of the lower woven fabric 20a are sticked to each other, and the rubber 20b at the underside of the lower woven fabric 20a and rubber 20c between the upper and lower woven fabrics 20a are slightly sticked to each other through the meshes in the lower fabric 20a. The foregoing is also applied to the relation between rubber 20d at the top of the upper woven fabric 20a and the auxiliary reinforcing layer 22. That is, the rubber 20c between the upper and lower woven fabrics 20a is slightly sticked to the auxiliary reinforcing layer 22 and the intermediate rubber layer 3, respectively, through the meshes in the woven fabrics 20a. When the axial stretch exceeds 10% as mentioned above, the rubber 20c is adapted to be separated from either one of the woven fabrics 20a. The at-break separable layer 20 is not limited to that above-mentioned. For example, canvas fabrics, plain-woven fabrics of cotton or the like may also be used as the woven fabrics 20a.

The embodiment shown in Fig. 6 can produce the following operational effect, in addition to the effect produced by the embodiment shown in Fig. 1. More specifically, when the main reinforcing layer 21 is broken, the at-break separable layer 20 interposed between the intermediate rubber layer 3 and the auxiliary reinforcing layer 22 presents exfoliation along the entire length of the hose. This causes the pressure of the internal fluid to be held by the entire inner peripheral surface of the auxiliary reinforcing layer 22. This prevents the auxiliary reinforcing layer 22 from being broken due to a local load exerted thereto as conventionally done. Accordingly, the internal fluid leaking outside of the main reinforcing layer 21 can be securely held by the auxiliary reinforcing layer 22, thus further securely preventing the fluid from leaking outside. Further, in a normal state where the main reinforcing layer 21 is not broken, the at-break separable layer 20 is sticked to the layers 22, 3 with a predetermined adhesive force. This does not involve the likelihood that a bend or the like of the hose in the normal state causes the at-break separable layer 20 to present exfoliation so that separated portions are broken due to abrasion of the separated portions with one another.

When aramid fiber cords or steel cords low in breaking stretch are used as the fiber cords in the main reinforcing layer 21 and polyester fiber cords or nylon fiber cords high in breaking stretch are used as the fiber cords in the auxiliary reinforcing layer 22, it is preferable to dispose the at-break separable layer 20. Further, when the fiber cords in both reinforcing layers 21, 22 are identical in material with each other and the difference in cord angle between both reinforcing layers 21, 22 is small (for example, when the cord angle of the fiber cords in the main reinforcing layer 21 is 35° and the cord angle of the auxiliary reinforcing layer 22 is 60°), it is also preferable to dispose the at-break separable layer 20.

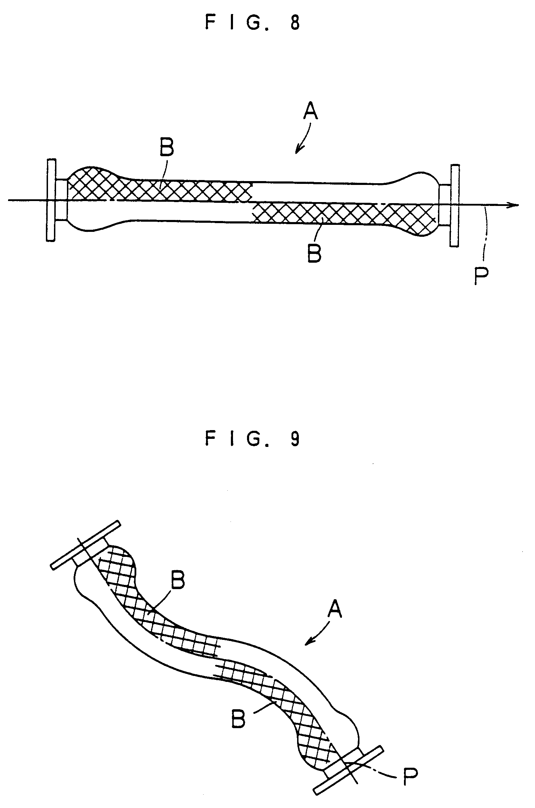

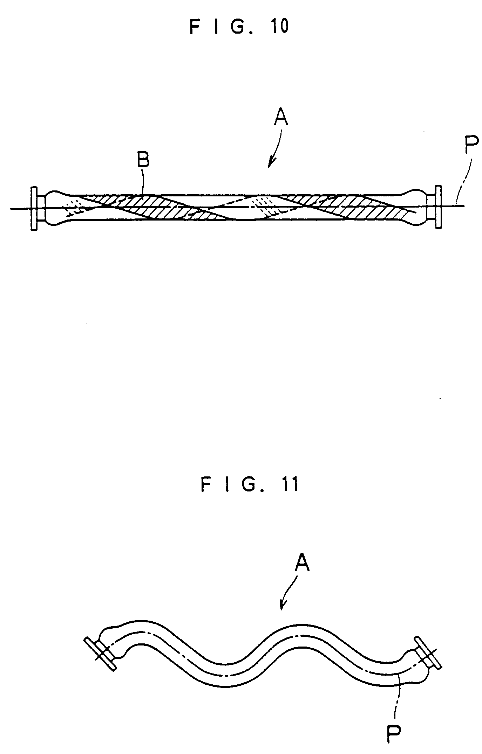

The present invention is not limited to the embodiments above-mentioned. For example, the reinforced rubber hose according to the present invention may contain a pair of portions B each of which contains the stretch restraining layer portion 22b having a semicircular section and which are successively disposed in the axial direction of the hose so as to be respectively located in the opposite semi-circumferential parts of the hose as shown in Fig. 8. In such an arrangement, when the main reinforcing layer 21 is broken, the reinforced rubber hose A is curved in the form of S as shown in Fig. 9, so that the breakdown of the main reinforcing layer 21 can be detected.

Alternatively, the portion B in which the stretch restraining layer portion 22b is laminated, may have a predetermined width and be helically wound on the outer periphery of the main layer portion 22a, as shown in Fig. 10. In such an arrangement, when the main reinforcing layer 21 is broken, the reinforced rubber hose A is helically bent as shown in Fig. 11, so that the breakdown of the main reinforcing layer 21 can be detected.

According to each of the embodiments above-mentioned, a chemical fiber such as a polyamide fiber, a Vinylon (RTM) fiber or the like, or a steel fiber can be used, in addition to a polyester fiber, for the fiber cords contained in each of the reinforcing layers 21, 22. Examples of the polyamide fiber include a nylon fiber and an aramid fiber (e.g., Kevlar (RTM) manufactured by Du Pont Co., Ltd.). Further, the fiber cords in the main reinforcing layer 21 may be different in material from the fiber cords in the auxiliary reinforcing layer 22.

Further, ring-like rigid members may be used instead of the helical wire 3a.

Further, when the reinforced rubber hose of the present invention is to be used on the sea, a buoyant material may be applied to the outside of the hose. Moreover, according to the present invention, the main reinforcing layer and the auxiliary reinforcing layer may not be necessarily laminated directly to the intermediate rubber layer. For example, the present invention may be arranged such that there are successively laminated, at the outer peripheral side of the intermediate rubber layer, a breaker layer, an outer rubber layer, a first buoyant-material layer, an auxiliary reinforcing layer, and a second buoyant-material layer.

### Tests

### (1) Destructive Test

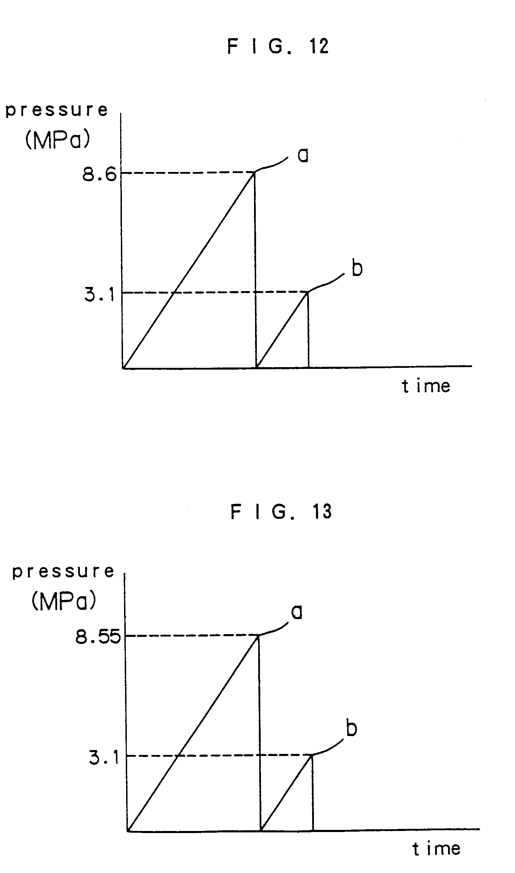

A destructive test using a water pressure was conducted on a reinforced rubber hose according to the embodiment shown in Fig. 1 in which the main reinforcing layer 21 had two lamination plies, the main layer portion 22a and the stretch restraining layer portion 22b of the auxiliary reinforcing layer 22 had two lamination plies and one lamination ply, respectively, and the cord angles of polyester fiber cords C in the main reinforcing layer 21, the main layer portion 22a and the stretch restraining layer portion 22b were respectively set to 45°, 70°, 45°. Fig. 12 shows the results of the test.

When a normal working pressure of 1.55 MPa (1 MPa corresponding to 1 kg/cm²) was exerted to the reinforced rubber hose, the hose presented a stretch of 0.4%. When a load of 8.6 MPa exceeding the design breaking pressure of 7.75 MPa was exerted to the hose, the main reinforcing layer 21 was broken, but the water was held by the auxiliary reinforcing layer 22 and did not leak outside. At the time of the breakdown above-mentioned, the hose presented a stretch of 5%. After the breakdown, a drop in water pressure was observed. When the pressure was again raised to the normal working pressure of 1.55 MPa, the hose was curved substantially in the form of a circular arc with the stretch restraining layer portion 22b located in the inner peripheral side of the circular arc. At this time, the ratio in elasticity between the hose side containing the stretch restraining layer portion 22b and the opposite hose side containing no stretch restraining layer portion 22b, was 3.1:1. Accordingly, the ratio in the amount of stretch between the both sides of the hose with the internal pressure exerted thereto, was 1:3.1. The difference in the amount of stretch caused the hose to be curved as mentioned above. Thereafter, when the pressure was further raised, the auxiliary reinforcing layer 22 was broken at the design breaking pressure of 3.1 MPa.

A destructive test similar to that above-mentioned was conducted on a reinforced rubber hose according to the embodiment shown in Fig. 6 in which the main reinforcing layer 21 had two lamination plies, the main layer portion 22a and the stretch restraining layer portion 22b of the auxiliary reinforcing layer 22 had two lamination plies and one lamination plies, respectively, and the cord angles of the polyester fiber cords C in the main reinforcing layer 21, the main layer portion 22a and the stretch restraining layer portion 22b were respectively set to 35°, 60°, 40°. Fig. 13 shows the results of the test.

When a normal working pressure of 1.55 MPa was exerted to the reinforced rubber hose, the hose presented a stretch of 1.8%. When a load of 8.55 MPa exceeding the design breaking pressure of 7.75 MPa was exerted to the hose, the main reinforcing layer 21 was broken, but the water was held by the auxiliary reinforcing layer 22 and did not leak outside. At the time of the breakdown above-mentioned, the hose presented a stretch of 15%. After the breakdown, a drop in water pressure was observed. When the pressure was again raised to the normal working pressure of 1.55 MPa, the hose was curved substantially in the form of a circular arc with the stretch restraining layer portion 22b located in the inner peripheral side of the circular arc. By such an arcuate deformation, the breakdown of the main reinforcing layer 21 could be detected. At this time, the ratio in elasticity between the hose side containing the stretch restraining layer portion 22b and the opposite hose side containing no stretch restraining layer portion 22b, was 2.2:1. Accordingly, the ratio in the amount of stretch between the both sides of the hose with the internal pressure exerted thereto, was 1:2.2. The difference in the amount of stretch caused the hose to be curved as mentioned above. Thereafter, when the pressure was further raised, the auxiliary reinforcing layer 22 was broken at the design breaking pressure of 3.1 MPa. At the time of an overhaul examination conducted after the test, it was made sure that the at-break separable layer 20 presented exfoliation along the entire length of the hose.

### (2) Bend Test

With a bending radius of six times the nominal hose inner diameter, the latter reinforced rubber hose used in the destructive test above-mentioned, was bent by 100,000 times with a normal working pressure of 1.55 MPa exerted to the hose. At the time of an overhaul examination of the hose conducted after the test, the at-break separable layer 20 presented no exfoliation.

As discussed in the foregoing, according to the reinforced rubber hose of the present invention, when the main reinforcing layer is broken to cause the internal pressure to be held by the auxiliary reinforcing layer, at least a part of the hose is curved, so that the breakdown of the main reinforcing layer can be securely detected. In particular, such detection can be made with no influence exerted by the distance between adjacent hose fixing points. Thus, the breakdown of the main reinforcing layer can be further securely detected.

Further, the cord angle of the fiber cords in the auxiliary reinforcing layer is set in the range from 60° to 80°. Accordingly, the auxiliary reinforcing layer can be securely provided with a sufficient amount of axial stretch such that the hose is deformed in the form of a circular arc at the time when the main reinforcing layer is broken. Further, since the auxiliary reinforcing layer is provided with such a sufficient amount of stretch, the shock exerted to the auxiliary reinforcing layer at the time of the breakdown of the main reinforcing layer, can be relieved. This results in prevention of the breakdown of the auxiliary reinforcing layer.

## Claims

1. A reinforced rubber hose comprising, between a tubular inner rubber layer (1) and a tubular outer rubber layer (5):
a tubular intermediate rubber layer (3) containing a helical rigid member (3a) or steel cords;
a tubular main reinforcing layer (21) containing fiber cords (C); and
a tubular auxiliary reinforcing layer (22) containing fiber cords (C),
said main reinforcing layer (21) is disposed between said tubular inner rubber layer (1) and said intermediate rubber layer (3),
said auxiliary reinforcing layer (22) is disposed between said tubular outer rubber layer (5) and said intermediate rubber layer (3),
characterized in that
said auxiliary reinforcing layer (22) comprises a tubular main layer portion (22a) and a stretch restraining layer portion (22b) laminated on said main layer portion (22a) at a circumferential part thereof, said stretch restraining layer portion (22b) being adapted to partially restrain said main layer portion (22a) from being stretched in the axial direction of said hose such that, when said main reinforcing layer (21) is broken to cause the internal pressure to be held by said auxiliary reinforcing layer (22), said hose is curved at at least a longitudinal part thereof, and
said fiber cords (C) in said main layer portion (22a) are inclined at an angle of 60° to 80° with respect to the axis of said hose (P).

2. A reinforced rubber hose according to Claim 1, further comprising, between the intermediate rubber layer (3) and the auxiliary reinforcing layer (22), a tubular at-break separable layer (20) adapted such that, when the main reinforcing layer (21) is broken, the component plies of said at-break separable layer (20) are separated from each other such that said hose is divided, along the entire length thereof, into an outer portion including said auxiliary reinforcing layer (22) and an inner portion including said intermediate rubber layer (3).

3. A reinforced rubber hose according to Claim 2, wherein the at-break separable layer (20) comprises two fabric layer portions (20a) and a binder layer portion (20c) interposed between said fabric layer portions (20a) for sticking said fabric layer portions (20a) to each other with a predetermined adhesive force, said binder layer portion (20c) being adapted to be separated from at least one of said fabric layer portions (20a) when the main reinforcing layer (21) is broken.

4. A reinforced rubber hose according to Claim 3, wherein one of the two fabric layer portions (20a) is sticked to the intermediate rubber layer (3) by a first rubber layer portion (20b), and the other (20a) is sticked to the auxiliary reinforcing layer (22) by a second rubber layer portion (20d), and the binder layer portion (20c) is a rubber layer portion sticked to said first and second rubber layer portions (20b, 20d) through meshes in the fabric layer portions (20a).

5. A reinforced rubber hose according to any of Claims 1 to 4, wherein the fiber cords (C) in the main reinforcing layer (21) and the fiber cords (C) in the auxiliary reinforcing layer (22) are made of the same material, and said fiber cords (C) in said main reinforcing layer (21) are inclined at an angle of 35° to 50° with respect to the axis of said hose (P).

6. A reinforced rubber hose according to any of Claims 1 to 5, wherein the stretch restraining layer portion (22b) is laminated on the main layer portion (22a) substantially at a semi-circumference thereof only.

7. A reinforced rubber hose according to any of Claims 1 to 5, wherein the stretch restraining layer portion (22b) includes a part (B) laminated on the main layer portion (22a) substantially at one semi-circumference thereof and a part (B) adjacent to said first-mentioned part and laminated on said main layer portion (22a) substantially at the other semi-circumference thereof, said stretch restraining layer portion (22b) being adapted such that, when the main reinforcing layer (21) is broken to cause the internal pressure to be held by the auxiliary reinforcing layer (22), said both parts (B) are bent to cause said hose to be bent in the form of S.

8. A reinforced rubber hose according to any of Claims 1 to 5, wherein the stretch restraining layer portion (22b) is helically wound on the periphery of the main layer portion (22a).

9. A reinforced rubber hose according to any of Claims 1 to 8, wherein the fiber forming the fiber cords (C) in the main reinforcing layer (21) is selected from the group consisting of a steel fiber, a polyester fiber, a Vinylon (RTM) fiber, a nylon fiber and an aramid fiber.

10. A reinforced rubber hose according to any of Claims 1 to 8, wherein the fiber forming the fiber cords (C) in the auxiliary reinforcing layer (22) is selected from the group consisting of a steel fiber, a polyester fiber, a Vinylon (RTM) fiber, a nylon fiber and an aramid fiber.

## Patentansprüche

1. Verstärkter Gummischlauch, der zwischen einer rohrförmigen inneren Gummilage (1) und einer rohrförmigen äußeren Gummilage (5) folgendes aufweist:
eine rohrförmige Gummizwischenlage (3), die ein schraubenförmiges steifes Element (3a) oder Stahlschnüre enthält;
eine rohrförmige Hauptverstärkungslage (21), die Faserschnüre (C) enthält; und
eine rohrförmige Hilfsverstärkungslage (22), die Faserschnüre (C) enthält,
wobei die Hauptverstärkungslage (21) zwischen der rohrförmigen inneren Gummilage (1) und der Gummizwischenlage (3) angeordnet ist,
wobei die Hilfsverstärkungslage (22) zwischen der rohrförmigen äußeren Gummilage (5) und der Gummizwischenlage (3) angeordnet ist,
dadurch gekennzeichnet, daß
die Hilfsverstärkungslage (22) einen rohrförmigen Hauptlagenbereich (22a) und einen dehnungsbegrenzenden Lagenbereich (22b) aufweist, der auf den Hauptlagenbereich (22a) an einem Umfangsteil davon auflaminiert ist, wobei der dehnungsbegrenzende Lagenbereich (22b) ausgebildet ist, um den Hauptlagenbereich (22a) teilweise an einer Dehnung in der Axialrichtung des Schlauchs zu hindern derart, daß, wenn die Hauptverstärkungslage (21) bricht, und so der Innendruck durch die Hilfsverstärkungslage (22) zum Halten gebracht wird, der Schlauch sich an wenigstens einem Längsteil davon wölbt, und
die Faserschnüre (C) in dem Hauptlagenbereich (22a) unter einem Winkel von 60° bis 80° in bezug auf die Schlauchachse (P) geneigt sind.

2. Verstärkter Gummischlauch nach Anspruch 1, der ferner zwischen der Gummizwischenlage (3) und der Hilfsverstärkungslage (22) eine rohrförmige, bei Bruch ablösbare Lage (20) aufweist, die so ausgebildet ist, daß, wenn die Hauptverstärkungslage (21) bricht, die einzelnen Schichten der bei Bruch ablösbaren Lage (20) voneinander getrennt werden, so daß der Schlauch über seine Gesamtlänge in einen äußeren Bereich, der die Hilfsverstärkungslage (22) aufweist, und einen inneren Bereich, der die Gummizwischenlage (3) aufweist, geteilt wird.

3. Verstärkter Gummischlauch nach Anspruch 2, wobei die bei Bruch ablösbare Lage (20) zwei Gewebelagenbereiche (20a) und einen Bindelagenbereich (20c) zwischen den Gewebelagenbereichen (20a) aufweist, um die Gewebelagenbereiche (20a) mit einer vorbestimmten Haftkraft aneinander zu befestigen, wobei der Bindelagenbereich (20c) ausgebildet ist, um von wenigstens einem der Gewebelagenbereiche (20a) abgelöst zu werden, wenn die Hauptverstärkungslage (21) bricht.

4. Verstärkter Gummischlauch nach Anspruch 3, wobei einer der beiden Gewebelagenbereiche (20a) an der Gummizwischenlage (3) durch einen ersten Gummilagenbereich (20b) haftend befestigt ist und der andere (20a) an der Hilfsverstärkungslage (22) durch einen zweiten Gummilagenbereich (20d) haftend befestigt ist und der Bindelagenbereich (20c) ein Gummilagenbereich ist, der an dem ersten und dem zweiten Gummilagenbereich (20b, 20d) durch Maschen in den Gewebelagenbereichen (20a) haftend befestigt ist.

5. Verstärkter Gummischlauch nach einem der Ansprüche 1 bis 4, wobei die Faserschnüre (C) in der Hauptverstärkungslage (21) und die Faserschnüre (C) in der Hilfsverstärkungslage (22) aus dem gleichen Material bestehen und die Faserschnüre (C) in der Hauptverstärkungslage (21) unter einem Winkel von 35° bis 50° in bezug auf die Schlauchachse (P) geneigt sind.

6. Verstärkter Gummischlauch nach einem der Ansprüche 1 bis 5, wobei der dehnungsbegrenzende Lagenbereich (22b) auf den Hauptlagenbereich (22a) im wesentlichen nur auf einen halben Umfang davon laminiert ist.

7. Verstärkter Gummischlauch nach einem der Ansprüche 1 bis 5, wobei der dehnungsbegrenzende Lagenbereich (22b) aufweist: einen Teil (B), der auf den Hauptlagenbereich (22a) im wesentlichen auf einen halben Umfang davon laminiert ist, und einen Teil (B) der an den erstgenannten Teil angrenzt, und der auf den Hauptlagenbereich (22a) im wesentlichen auf den anderen halben Umfang davon laminiert ist, wobei der dehnungsbegrenzende Lagenbereich (22b) derart ausgebildet ist, daß, wenn die Hauptverstärkungslage (21) bricht und so der Innendruck durch die Hilfsverstärkungslage (22) zum Halten gebracht wird, die beiden Teile (B) gekrümmt werden, um den Schlauch dazu zu bringen, zu S-Gestalt gekrümmt zu werden.

8. Verstärkter Gummischlauch nach einem der Ansprüche 1 bis 5, wobei der dehnungsbegrenzende Lagenbereich (22b) schraubenförmig auf den Außenumfang des Hauptlagenbereichs (22a) gewickelt ist.

9. Verstärkter Gummischlauch nach einem der Ansprüche 1 bis 8, wobei die Faser, die die Faserschnüre (C) in der Hauptverstärkungslage (21) bildet, aus der Gruppe ausgewählt ist, die aus einer Stahlfaser, einer Polyesterfaser, einer Vinylon(RTM)-Faser, einer Nylonfaser und einer Aramidfaser besteht.

10. Verstärkter Gummischlauch nach einem der Ansprüche 1 bis 8, wobei die Faser, die die Faserschnüre (C) in der Hilfsverstärkungslage (22) bildet, aus der Gruppe ausgewählt ist, die aus einer Stahlfaser, einer Polyesterfaser, einer Vinylon(RTM)-Faser, einer Nylonfaser und einer Aramidfaser besteht.

## Revendications

1. Tuyau en caoutchouc renforcé comprenant, entre une couche de caoutchouc intérieure tubulaire (1) et une couche de caoutchouc extérieure tubulaire (5) :
une couche de caoutchouc intermédiaire tubulaire (3) contenant un élément rigide en hélice (3a) ou des cordes en acier,
une couche de renforcement principale tubulaire (21) contenant des cordes en fibre (C) et
une couche de renforcement auxiliaire tubulaire (22) contenant des cordes en fibre (C),
la couche de renforcement principale (21) étant placée entre la couche de caoutchouc intérieure tubulaire (1) et la couche de caoutchouc intermédiaire (3) et
la couche de renforcement auxiliaire (22) étant placée entre la couche de caoutchouc extérieure tubulaire (5) et la couche de caoutchouc intermédiaire (3),
caractérisé par le fait que
la couche de renforcement auxiliaire (22) comprend une partie principale tubulaire (22a) et une partie anti-allongement (22b) appliquée sur cette partie principale (22a) dans une partie circonférentielle de celle-ci, la partie anti-allongement (22b) étant faite pour empêcher partiellement l'allongement de la partie principale (22a) dans la direction axiale du tuyau de façon que lorsque la couche de renforcement principale (21) se rompt et qu'ainsi la pression intérieure est supportée par la couche de renforcement auxiliaire (22), le tuyau se courbe sur au moins une partie de sa longueur, et
les cordes en fibre (C) de la partie de couche principale (22a) sont inclinées d'un angle de 60° à 80° par rapport à l'axe (P) du tuyau.

2. Tuyau en caoutchouc renforcé selon la revendication 1, comprenant en outre, entre la couche de caoutchouc intermédiaire (3) et la couche de renforcement auxiliaire (22), une couche tubulaire dissociable à la rupture (20) faite de façon qu'à la rupture de la couche de renforcement principale (21), ses strates composantes se séparent les unes des autres de façon que le tuyau se divise sur toute sa longueur en une partie extérieure contenant la couche de renforcement auxiliaire (22) et une partie intérieure contenant la couche de caoutchouc intermédiaire (3).

3. Tuyau en caoutchouc renforcé selon la revendication 2, dans lequel la couche dissociable à la rupture (20) comprend deux parties en tissu (20a) et une partie liante (20c) placée entre ces parties en tissu (20a) pour les coller l'une à l'autre avec une force d'adhérence déterminée, la partie liante (20c) étant faite pour se séparer d'au moins une des parties en tissu (20a) lorsque la couche de renforcement principale (21) se rompt.

4. Tuyau en caoutchouc renforcé selon la revendication 3, dans lequel une des deux parties de couche en tissu (20a) est collée à la couche de caoutchouc intermédiaire (3) par une première partie de couche en caoutchouc (20b) et l'autre (20a) est collée à la couche de renforcement auxiliaire (22) par une deuxième partie de couche en caoutchouc (20d), et la partie de couche liante (20c) est une partie de couche en caoutchouc collée aux première et deuxième parties de couche en caoutchouc (20b, 20c) à travers les mailles des parties de couche en tissu (20a).

5. Tuyau en caoutchouc renforcé selon l'une des revendications 1 à 4, dans lequel les cordes en fibre (C) de la couche de renforcement principale (21) et les cordes en fibre (C) de la couche de renforcement auxiliaire (22) sont faites de la même matière, et les cordes en fibre (C) de la couche de renforcement principale (21) sont inclinées d'un angle de 35° à 50° par rapport à l'axe (P) du tuyau.

6. Tuyau en caoutchouc renforcé selon l'une des revendications 1 à 5, dans lequel la partie de couche anti-allongement (22b) est appliquée sur la partie de couche principale (22a) sensiblement sur une demi-circonférence seulement de celle-ci.

7. Tuyau en caoutchouc renforcé selon l'une des revendications 1 à 5, dans lequel la partie de couche anti-allongement (22b) comporte une partie (B) appliquée sur la partie de couche principale (22a) sensiblement sur une demi-circonférence de celle-ci et une partie (B) contiguë à la précédente et appliquée sur la partie de couche principale (22a) sensiblement sur l'autre demi-circonférence de celle-ci, la partie de couche anti-allongement (22b) étant faite de façon que lorsque la couche de renforcement principale (21) se rompt et la pression intérieure est alors supportée par la couche de renforcement auxiliaire (22b), les deux parties (B) se courbent de façon que le tuyau se courbe en forme de S.

8. Tuyau en caoutchouc renforcé selon l'une des revendications 1 à 5, dans lequel la partie de couche anti-allongement (22b) est enroulée en hélice autour de la partie de couche principale (22a).

9. Tuyau en caoutchouc renforcé selon l'une des revendications 1 à 8, dans lequel la fibre formant les cordes en fibre (C) de la couche de renforcement principale (21) est choisie dans le groupe constitué des fibres d'acier, de polyester, de Vinylon (marque déposée), de nylon et d'aramide.

10. Tuyau en caoutchouc renforcé selon l'une des revendications 1 à 8, dans lequel la fibre formant les cordes en fibre (C) de la couche de renforcement auxiliaire (22) est choisie dans le groupe constitué des fibres d'acier, de polyester, de Vinylon (marque déposée), de nylon et d'aramide.
